Europäisches Patentamt

European Patent Office

Office européen des brevets

(11) Veröffentlichungsnummer: **0 212 155**
**B1**

# EUROPÄISCHE PATENTSCHRIFT

(45) Veröffentlichungstag der Patentschrift: **16.05.90**

(51) Int. Cl.⁵: **H 02 M 7/523**

(21) Anmeldenummer: **86108861.5**

(22) Anmeldetag: **30.06.86**

(54) **Spannungsumrichter.**

(30) Priorität: **26.07.85 CH 3250/85**

(43) Veröffentlichungstag der Anmeldung:
**04.03.87 Patentblatt 87/10**

(45) Bekanntmachung des Hinweises auf die
Patenterteilung:
**16.05.90 Patentblatt 90/20**

(84) Benannte Vertragsstaaten:
**AT CH DE FR GB IT LI NL SE**

(56) Entgegenhaltungen:
**CH-A- 499 232**
**US-A-3 496 092**

**International Paver Electronic Conference 27-
31.3. 83, Tokyo, Japan. S 1587-1598**

(73) Patentinhaber: **BBC Brown Boveri AG
Haselstrasse
CH-5401 Baden (CH)**

(72) Erfinder: **Umbricht, Stefan
Bahnhofstrasse 44
CH-5430 Wettingen (CH)**

**Beschreibung**

· Bei der Erfindung wird ausgegangen von einem Spannungsumrichter nach dem Oberbegriff der Patentansprüche 1 und 5.

Mit diesem Oberbegriff nimmt die Erfindung auf einen Stand der Technik von Spannungsumrichtern Bezug, wie er in dem Konferenzbericht: International Power Electronic Conference vom 27. — 31.3.1983 in Tokyo, Japan, S. 1587—1598 beschrieben ist. Dort ist für den Antrieb von Induktionsmotoren eines elektrisch betriebenen Fahrzeugs eine dreiphasige Wechselrichter-Brückenschaltung, der eingangsseitig eine Gleichspannung von 1,5 kV mittels Stromabnehmern von einer Fahrdrahtleitung zugeführt ist, angegeben. Jeder Brückenzweig weist zwei in Reihe geschaltete abschaltbare Thyristoren auf, wobei jeder für eine Sperrspannung von 2,5 kV und einen Strom von 1,6 kA ausgelegt ist. Jedem Thyristor ist ein Abschaltentlastungskreis zugeordnet, der in Parallelschaltung zum Thyristor eine Beschaltungsdiode in Reihe mit einem Beschaltungskondensator aufweist. Parallel zu dieser Beschaltungsdiode, die die gleiche Polung wie der Thyristor aufweist, ist ein Beschaltungswiderstand in Reihe mit einer Wicklung eines Rückspeisetransformators geschaltet. Mittels des Rückspeisetransformators kann die in den beiden Beschaltungskondensatoren der beiden Thyristoren gespeicherte Energie ins Gleichspannungsnetz zurückgespeist werden. In Reihe zu den beiden Thyristoren ist eine einfache Drossel zur Stromanstiegsbegrenzung und eine dazu in Reihe geschaltete sättigbare Drossel zur Verringerung momentaner Ueberspannungen beim Einschalten der Thyristoren vorgesehen. Um die in den beiden Drosseln gespeicherte Energie zurückzugewinnen, ist in einem Parallelzweig zu den Drosseln (Freilaufzweig) die Wicklung eines zweiten Rückspeisetransformators in Reihe mit einer Diode geschaltet.

Nachteilig dabei ist, dass je Wechselrichterzweig für eine im Vergleich zur Sperrspannung der Thyristoren niedrige Speisegleichspannung zwei relativ teure, abschaltbare Thyristoren in Reihe zu schalten sind.

Die Erfindung, wie sie in den Patentansprüchen 1 und 5 definiert ist, löst die Aufgabe, einen Spannungsumrichter anzugeben, der bei einer gegebenen Gleichspannung mit einem geringeren Aufwand bezüglich der abschaltbaren Thyristoren auskommt.

Ein Vorteil der Erfindung liegt darin, dass bei im Vergleich zur Sperrspannung der Thyristoren niedriger Speisegleichspannung, wie z.B. bei einer Sperrspannung von 2,5 kV und einer Speisegleichspannung von 1,5 kV, die Anzahl benötigter Thyristoren auf die Hälfte reduziert werden kann. Damit ist eine erhebliche Kosteneinsparung verbunden, da die Kosten für einen abschaltbaren Thyristor etwa fünf- bis zehnmal so hoch sind wie die Kosten der zusätzlich benötigten Schaltelemente zur Reduzierung von Ueberspannungen beim Ein- und Ausschalten der Thyristoren. Reihenschaltungen von Thyristoren sind relativ schwierig zu beherrschen; die in Reihe zu schaltenden Thyristoren müssen gut übereinstimmende Daten aufweisen.

Ein weiterer Vorteil besteht darin, dass bei gegebener Speisegleichspannung abschaltbare Thyristoren mit vergleichsweise geringerer Spannungsfestigkeit verwendet werden können, was wiederum eine erhebliche Kosteneinsparung zur Folge haben kann.

Die Erfindung wird nachstehend anhand von Ausführungsbeispielen erläutert. Es zeigen:

Fig. 1 und 2 zueinander äquivalente Schaltbilder eines Spannungsumrichters mit nur einer Strombegrenzungsdrossel in Reihe mit zwei abschaltbaren Thyristoren, wobei ein Ueberspannungskondensator über eine Drosselfreilaufdiode zu den beiden Thyristoren parallelgeschaltet ist und über einen Drosselfreilaufwiderstand mit einem Gleichspannungsanschluss in Verbindung steht,

Fig. 3 eine der Fig. 1 entsprechende Spannungsumrichterschaltung, wobei der Ueberspannungskondensator über einen zusätzlichen Kondensator-Entladungswiderstand mit einem Gleichspannungsanschluss in Verbindung steht,

Fig. 4 eine Spannungsumrichter-Schaltung gemäss Fig. 3 mit zwei endseitigen Strombegrenzungsdrosseln und zugehörigen Freilaufkreisen,

Fig. 5 eine der Fig. 4 äquivalente Spannungsumrichterschaltung mit vier in Reihe geschalteten Thyristoren und

Fig. 6 eine Spannungsumrichterschaltung mit einer Strombegrenzungsdrossel mit Mittelabgriff, die zwischen zwei Thyristoren in Reihe geschaltet ist.

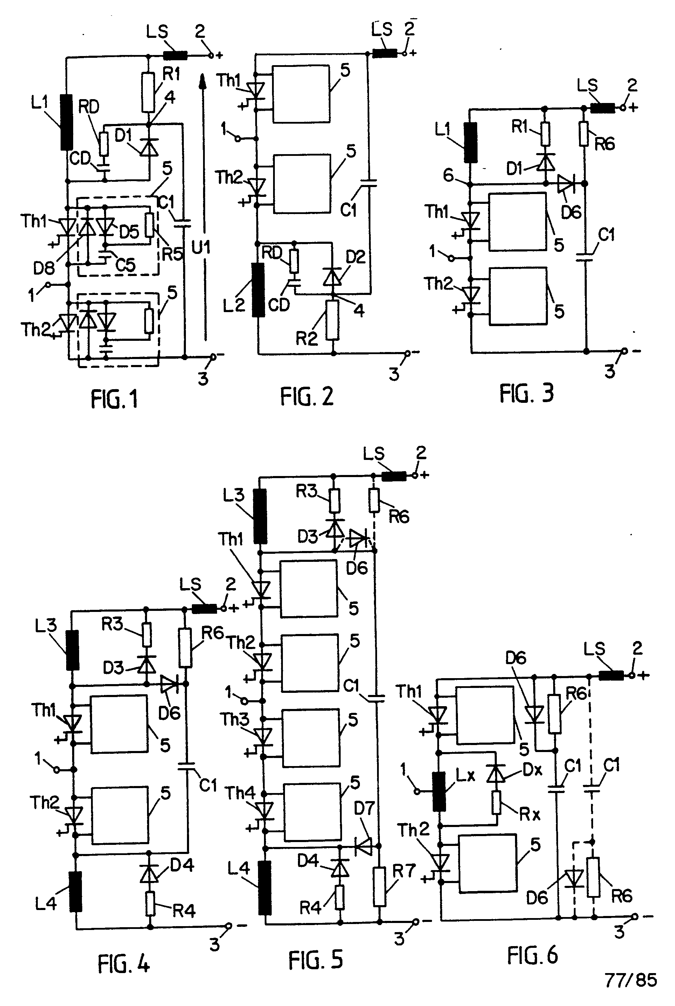

In Fig. 1 sind mit 1 ein Wechselspannungsanschluss, mit 2 ein Gleichspannungsanschluss positiver Polarität an eine nicht dargestellte Gleichspannungsquelle und mit 3 ein Gleichspannungsanschluss negativer Polarität derselben Gleichspannungsquelle bezeichnet. Es wird eine Gleichspannung U1 von 1,5 kV verwendet. Der Wechselspannungsanschluss 1 ist einerseits in einem ersten Stromrichterzweig über einen ersten abschaltbaren Thyristor Th1, auch GTO- (gate turn off)-Thyristor genannt, sowie eine dazu in Reihe geschaltete Strombegrenzungsdrossel L1 mit einer Induktivität von 14 µH mit dem positiven Gleichspannungsanschluss 2 und andererseits in einem zweiten Stromrichterzweig über einen zweiten abschaltbaren Thyristor Th2 mit dem negativen Gleichspannungsanschluss 3 verbunden. Dabei ist der Wechselspannungsanschluss 1 mit der Kathode des Thyristors Th1 und mit der Anode des Thyristors Th2 verbunden. In der Verbindungsleitung der Strombegrenzungsdrossel L1 mit dem Gleichspannungsanschluss 2 ist eine Streuinduktivität LS eingetragen, die kein besonderes Bauelement ist, sondern durch die Leitungszuführungen bedingt, etwa 1 µH beträgt und an sich unerwünscht ist. Eine derartige Streuinduktivität LS könnte selbstverständlich auch in der Zuleitung vom Thyristor Th2 zum Gleichspannungsanschluss 3 eingetragen sein.

In einem Parallelzweig zur Strombegrenzungsdrossel L1 ist eine Drosselfreilaufdiode D1 in Reihe mit einem Drosselfreilaufwiderstand R1 von 0,1 Ω geschaltet. Ferner ist in einem Parallelzweig zur Drosselfreilaufdiode D1 ein Dioden-Beschaltungskondensator CD von 0,2 µF in Reihe zu einem Dioden-Beschaltungswiderstand RD von 5 Ω geschaltet, um unerwünschte Ueberspannungen an der Drosselfreilaufdiode D1 zu verhindern.

Zu jedem der beiden abschaltbaren Thyristoren Th1 und Th2 ist eine gleich aufgebaute und dimensionierte Thyristorbeschaltung bzw. ein Abschaltentlastungskreis 5 vorgesehen. Der Abschaltentlastungskreis 5 weist eine Thyristor-Freilaufdiode D8 auf, die entgegengesetzt gepolt ist wie der jeweilige Thyristor. In einem Parallelzweig zur Thyristor-Freilaufdiode D8 ist ein Thyristor-Beschaltungskondensator C5 von 4 µF in Reihe mit einer Thyristor-Beschaltungsdiode D5 geschaltet. Parallel zu der Thyristor-Beschaltungsdiode D5 ist ein Thyristor-Beschaltungswiderstand R5 von 6 Ω geschaltet. Für den Abschaltentlastungskreis werden vorzugsweise induktivitätsarme Bauelemente D8, D5, C5 und R5 verwendet, wobei die Bauelemente Th1 bzw. Th2, D8, D5 und C5 koaxial und in geringem Abstand zueinander angeordnet sind. Die Thyristor-Freilaufdiode D8 kann auch in das Bauelement des Thyristors integriert sein. Vorzugsweise sind mehrere induktionsarme Thyristor-Beschaltungsdioden D5 und Thyristor-Beschaltungskondensatoren C5 zueinander parallel und/oder in Reihe geschaltet (nicht eingezeichnet).

Durch Verminderung der Streuinduktivitäten von Thyristor-Beschaltungsdioden D5, -Kondensatoren C5 und Leitungsanschlüssen des Abschaltentlastungskreises 5 eines tablettenförmigen Leistungsthyristors Th1 bzw. Th2, der für Sperrspannungen von 2,5 kV und Abschaltströme von 1,8 kA ausgelegt ist, lässt sich dessen zulässiger Abschaltstrom erhöhen und dessen Impulszackenspannung des ersten steilen Anstiegs der Anoden-Kathodenspannung bei dessen Ausschalten verringern.

Ein Abgriff bzw. eine elektrische Verbindungsstelle 4 zwischen der Drosselfreilaufdiode D1 und dem Drosselfreilaufwiderstand R1 ist über einen Ueberspannungskondensator C1 von 15 µF mit dem negativen Gleichspannungsanschluss 3 verbunden.

In Fig. 1 ist ein einphasiger Spannungsumrichter mit zwei Stromrichterzweigen dargestellt, der z.B. als Wechselrichter verwendet werden kann. Zur Erzeugung einer dreiphasigen Wechselspannung wären drei derartige Spannungsumrichter vorzusehen, die gleichstromseitig an dieselbe Gleichspannungsquelle angeschlossen werden könnten. Die Wechselspannung könnte dann an drei getrennten Wechselspannungsanschlüssen 1 abgegriffen werden, wobei die Thyristoren in an sich bekannter Weister entsprechend phasenverschoben geschaltet werden.

Beim Abschalten z.B. des Thyristors Thl kann der durch die Strombegrenzungsdrossel L1 fliessende Strom einerseits durch den Freilaufkreis L1, D1, R1 und andererseits über D5, R5, C5, 1 durch eine bei 1 anzuschliessende Last, z.B. einen Motor, (nicht dargestellt) fliessen.

Der durch die Streuinduktivität LS fliessende Strom kann einerseits über R1, C1, 5, 1 sowie andererseits über L1, D5, C5, 1 und die dort angeschlossene Last abgebaut werden.

Für den Abbau des durch die Streuinduktivität LS fliessenden Stromes gibt es grundsätzlich zwei Möglichkeiten:

1. man kann, falls verfügbar, Thyristoren mit höherer Sperrspannung verwenden oder

2. im Abschaltentlastungskreis 5 einen grösseren Thyristor-Beschaltungskondensator C5 vorsehen.

Da der Thyristor-Beschaltungskondensator C5 bei jedem Einschalten des Thyristors über den Thyristor-Beschaltungswiderstand R5 entladen wird, sollte er aber, zur Vermeidung von Energieverlusten, möglichst klein sein. Eine Lösung dieses Problems bietet hier der Ueberspannungskondensator C1, der nicht ganz entladen wird, so dass es keine zusätzlichen Verluste gibt.

Eine weitere Möglichkeit zur Verringerung einer Abschaltüberspannung

$$\Delta U \approx i_{Th} \sqrt{L/C},$$

besteht in der Verkleinerung der Streuinduktivität LS, was durch induktionsarme Leitungen und koaxial angeordnete, induktionsarme Bauelemente erreichbar ist. In der Formel bedeuten: $i_{Th}$ den Abschaltstrom durch den Thyristor, L die Induktivität von LS und C die Kapazität von C5. Der Ueberspannungskondensator C1 ist möglichst nahe und induktionsarm an die abschaltbaren Thyristoren Th1 und Th2 angeschlossen.

Bei der Schaltung gemäss Fig. 2 ist anstelle der Strombegrenzungsdrossel L1 in Fig. 1 eine Strombegrenzungsdrossel L2 vorgesehen, die in Reihe zwischen dem Thyristor Th2 und dem negativen Gleichspannungsanschluss 3 geschaltet ist. In einem Parallelzweig zur Strombegrenzungsdrossel L2 ist wieder, wie bei der Schaltung gemäss Fig. 1, eine Drosselfreilaufdiode D2 in Reihe mit einem Drosselfreilaufwiderstand R2 geschaltet. Parallel zu D2 ist ein Dioden-Beschaltungskondensator CD in Reihe mit einem Dioden-Beschaltungswiderstand RD geschaltet. Die elektrische Verbindungsstelle 4 für den Anschluss des Ueberspannungskondensators C1 entspricht derjenigen von Fig. 1, wobei C1 andererseits über LS an den positiven Gleichspannungsanschluss 2 angeschlossen ist. Die Wirkungsweise dieser Schaltung ist die gleiche wie bei der Schaltung gemäss Fig. 1.

Die Schaltung gemäss Fig. 3 entspricht derjenigen von Fig. 1, wobei die Bauelemente RD und CD aus Gründen der besseren Uebersichtlichkeit weggelassen wurden. In einem zusätzlichen Parallelzweig zur Strombegrenzungsdrossel L1 sind eine Diode D6 in Reihe mit einem Kondensator-Entladungswiderstand R6 geschaltet, wobei C1 einerseits mit der Verbindungsstelle von D6 und R6 bzw. mit der Kathode von D6 und andererseits mit 3 verbunden ist. R6 ist mit seinem Widerstandswert speziell an LS und C1 angepasst.

Fig. 4 zeigt eine Spannungsumrichterschaltung mit zwei bezüglich der Thyristoren Th1 und Th2 endseitigen Strombegrenzungsdrosseln L3 und L4 mit zugehörigen Freilaufzweigen D3, R3 und D4, R4. Die Schaltung von Fig. 4 unterscheidet sich von derjenigen der Fig. 3 lediglich dadurch, dass zwischen Th2 und dem negativen Gleichspannungsanschluss 3 die Strombegrenzungsdrossel L4 mit Freilaufzweig D4, R4 zusätzlich vorgesehen ist und dass C1 nicht direkt mit 3, sondern mit der elektrischen Verbindungsstelle von Th2 und L4 verbunden ist.

Ein Vorteil dieser Schaltung gegenüber derjenigen von Fig. 1 bis 3 besteht darin, dass kleiner dimensionierte Strombegrenzungsdrosseln und zugehörige Beschaltungselemente verwendet werden können.

Die Schaltung von Fig. 5 unterscheidet sich von derjenigen der Fig. 4 dadurch, dass jeder der beiden Zweige des Spannungsumrichters 2 in Reihe geschaltete Thyristoren Th1 und Th2 bzw. Th3 und Th4 mit zugehörigen Abschaltentlastungskreisen 5 aufweist. Parallel zu dem Freilaufzweig D4, R4 von L4 ist eine Diode D7 mit einem Kondensatorentladungswiderstand R7 geschaltet. Der Ueberspannungskondensator C1 ist einerseits mit der elektrischen Verbindungsstelle von L3 mit Th1 und andererseits mit der elektrischen Verbindungsstelle von D7 und R7 verbunden, wie es ausgezogen dargestellt ist. Hierbei fehlen die Bauelemente D6 und R6 von Fig. 4. Alternativ können jedoch D6 und R4 vorhanden und wie in Fig. 4 geschaltet sein, wie es in Fig. 5 gestrichelt angedeutet ist.

Bei der Schaltung gemäss Fig. 6 ist eine Strombegrenzungsdrossel Lx zwischen abschaltbare Thyristoren Th1 und Th2 in Reihe geschaltet, wobei die Anode von Th1 über die Streuinduktivität LS mit dem positive Gleichspannungsanschluss 2 und die Kathode von Th2 mit dem negativen Gleichspannungsanschluss 3 verbunden ist. Die Strombegrenzungsdrossel Lx weist einen parallelgeschalteten Freilaufzweig mit einer Drosselfreilaufdiode Dx in Reihe mit einem Drosselfreilaufwiderstand Rx und einen mit dem Wechselspannungsanschluss 1 verbundenen Mittelabgriff auf. Jedem Thyristor Th1 und Th2 ist ein Abschaltentlastungskreis 5 zugeordnet. Der Ueberspannungskondensator C1 kann einerseits über einen Kondensatorentladungswiderstand R6 mit dazu parallelgeschalteter Diode D6 mit dem positive Gleichspannungsanschluss 2 und andererseits direkt mit dem negativen Gleichspannungsanschluss 3 in Verbindung stehen, wie es ausgezogen dargestellt ist. Der Ueberspannungskondensator C1 kann aber auch einerseits über LS mit 2 und andererseits über R6 mit 3 verbunden sein, wobei D6 wieder zu R6 parallelgeschaltet ist, wie es gestrichelt angedeutet ist.

**Patentansprüche**

1. Spannungsumrichter
a) mit zwei entgegengesetztes Potential führenden Gleichspannungsanschlüssen (2, 3) und einem Wechselspannungsanschluss (1),
b) mit mindestens zwei in Reihe geschalteten, abschaltbaren GTO-Thyristoren (Th1 ... Th4), die je einen parallelgeschalteten Abschaltentlastungskreis (5) aufweisen,
c) mit mindestens einer Strombegrenzungsdrossel (L1 ... L4, Lx) in Reihe mit den GTO-Thyristoren,
d) wobei in einem Parallelzweig zu jeder Strombegrenzungsdrossel eine Drosselfreilaufdiode (D1 ... D4, Dx) vorgesehen ist,
dadurch gekennzeichnet,
e) dass in Reihe zu jeder Drosselfreilaufdiode ein Drosselfreilaufwiderstand (R1 ... R4, Rx) geschaltet ist,
f) dass ein Ueberspannungskondensator (C1) vorgesehen ist,
g) der einerseits über einen Drosselfreilaufwiderstand (R1, R2, R6) mit einem ersten Gleichspannungsanschluss (2, 3) und
h) andererseits mit einem entgegengesetztes Potential (−, +) führenden zweiten Gleichspannungsanschluss (3, 2) des Spannungsumrichters in Wirkverbindung steht.

2. Spannungsumrichter nach Anspruch 1, dadurch gekennzeichnet,
a) dass eine erste Anschlusseite des Ueberspannungskondensators (C1) einerseits über eine Diode (D6) mit einer elektrischen Verbindungsstelle zwischen einer ersten Strombegrenzungsdrossel (L1, L3) und einem ersten GTO-Thyristor (Th1) und
b) andererseits über einen als Drosselbeilauf -bzw. als kondensator-entladung wirkenden Widerstand (R6), der in Reihe mit dieser Diode (D6) in einem Parallelzweig zu dieser Strombegrenzungsdrossel geschaltet ist, mit einem ersten Gleichspannungsanschluss (2, 3) in Wirkverbindung steht.

3. Spannungsumrichter nach Anspruch 2, dadurch gekennzeichnet,
a) dass eine zweite Anschlusseite des Ueberspannungskondensators (C1) mit einer Verbindungsstelle zwischen einer zweiten Strombegrenzungsdrossel (L4) und einem zweiten GTO-Thyristor (Th2) in Wirkverbindung steht und
b) dass in einem Parallelzweig zu dieser zweiten Strombegrenzungsdrossel ein Drosselfreilaufwiderstand (R4) mit einer Drosselfreilaufdiode (D4) in Reihe geschaltet ist.

4. Spannungsumrichter nach Anspruch 3, dadurch gekennzeichnet,
a) dass der Ueberspannungskondensator (C1) einerseits über eine Diode (D7) mit einer elektrischen Verbindungsstelle zwischen der zweiten Strombegrenzungsdrossel (L4) und dem zweiten GTO-Thyristor (Th4) und
b) andererseits über einen Kondensator-Entladungswiderstand (R7), der in Reihe mit einer Diode (D7) in einem Parallelzweig zu dieser zwei-

ten Strombegrenzungsdrossel (L4) geschaltet ist, mit einem zweiten Gleichspannungsanschluss (3) in Wirkverbindung steht.

5. Spannungsumrichter mit den Merkmalen a) bis d) des Anspruchs 1, dadurch gekennzeichnet,

e) dass in Reihe zu jeder Drosselfreilaufdiode ein Drosselfreilaufwiderstand (R1 ... R4, Rx) geschaltet ist,

f) dass mindestens eine Strombegrenzungsdrossel (Lx) zwischen mindestens zwei GTO-Thyristoren (Th1, Th2) geschaltet ist,

g) dass mindestens ein Ueberspannungskondensator (C1) vorgesehen ist,

h) der einerseits über einen Kondensator-Entladungswiderstand (R6) mit einem ersten Gleichspannungsanschluss (2, 3) und

i) andererseits mit einem entgegengesetztes Potential (−, +) führenden zweiten Gleichspannungsanschluss (3, 2) des Spannungsumrichters in Wirkverbindung steht,

j) wobei in einem Parallelzweig zu diesem Kondensator-Entladungswiderstand (R6) eine Diode (D6) vorgesehen ist, deren Anode mit der positiven Potentialseite des Kondensator-Entladungswiderstandes in Verbindung steht.

6. Spannungsumrichter nach einem der Ansprüche 1 bis 5, dadurch gekennzeichnet,

a) dass der Abschaltentlastungskreis (5) eine zum GTO-Thyristor (Th1 ... Th4) antiparallele Thyristor-Freilaufdiode (D8).

b) mindestens eine Thyristor-Beschaltungsdiode (D5) mit gleicher Polung wie der GTO-Thyristor,

c) mindestens einen zur Thyristorbeschaltungsdiode (D5) in Reihe geschalteten Thyristor-Beschaltungskondensator (C5) und

d) mindestens einen Thyristor-Beschaltungswiderstand (R5) in einem Parallelzweig zu der Thyristor-Beschaltungsdiode aufweist.

7. Spannungsumrichter nach Anspruch 6, dadurch gekennzeichnet,

a) dass die Thyristor-Beschaltungsdiode (D5) und der Thyristor-Beschaltungskondensator (C5) gleiche Bauelement-Achsrichtung wie der Thyristor (Th1 ... Th4) aufweisen und

b) dass die elektrischen Anschlüsse zwischen den Thyristoren und den übrigen Bauelementen induktionsarm ausgeführt sind.

**Revendications**

1. Convertisseur de tension comportant:

a) deux bornes de tension continue de polarités opposées (2, 3) et une borne de tension alternative (1);

b) au moins deux thyristors GTO déclenchables (Th1, ..., Th4), montés en série, qui présentent chacun un circuit de décharge de déclenchement (5) en parallèle;

c) au moins une bobine de réactance limiteuse d'intensité (L1, ..., L4, Lx) en série avec les thyristors GTO;

d) une branche parallèle à chacune des bobines de réactance limiteuses d'intensité comprenant une diode de roue libre de bobine de réactance (D1, ..., D4, Dx); caractérisé en ce que

e) une résistance de roue libre de bobine de réactance (R1, ..., Rx) est montée en série avec chacune des diodes de roue libre de bobine de réactance;

f) un condensateur de surtension (C1) est prévu;

g) ce condensateur étant en liaison active, d'une part, par l'intermédiaire d'une resistance de roue libre de bobine de réactance (R1, R2, R6) avec une première borne de tension continue (2, 3), et

h) d'autre part, avec une deuxième borne de tension continue (3, 2) portant un potentiel opposé (−, +) du convertisseur de tension.

2. Convertisseur de tension suivant la revendication 1, caractérisé en ce que

a) un premier côté de connexion du condensateur de surtension (C1) est en liaison active, d'une part, par l'intermédiaire d'une diode (D6), avec un endroit de jonction électrique entre une première bobine de réactance limiteuse d'intensité (L1, L3) et un premier thyristor GTO (Th1), et

b) d'autre part, par l'intermédiaire d'une résistance (R6) servant de résistance de roue libre de bobine de réactance ou de résistance de décharge de condensateur montée en série avec cette diode (D6) dans une branche parallèle à cette bobine de réactance limiteuse d'intensité avec une première borne de tension continue (2, 3).

3. Convertisseur de tension suivant la revendication 2, caractérisé en ce que

a) un deuxième côté de connexion du condensateur de surtension (C1) est en liaison active avec un endroit de jonction entre une deuxième bobine de réactance limiteuse d'intensité (L4) et un deuxième thyristor GTO (Th2), et

b) une résistance de roue libre de bobine de réactance (R4) est montée en série avec une diode de roue libre de bobine de réactance (D4) dans une branche parallèle à cette deuxième bobine de réactance limiteuse d'intensité.

4. Convertisseur de tension suivant la revendication 3, caractérisé en ce que

a) le condensateur de surtension (C1) est en liaison active, d'une part, par l'intermédiaire d'une diode (D7), avec un endroit de jonction électrique entre la deuxième bobine de réactance limiteuse d'intensité (L4) et le deuxième thyristor GTO (Th4), et

b) d'autre part, par l'intermédiaire d'une résistance de décharge de condensateur (R7) qui est montée en série avec une diode (D7) dans une branche parallèle à cette deuxième bobine de réactance limiteuse d'intensité (L4), avec une deuxième borne de tension continue (3).

5. Convertisseur de tension présentant les particularités a) à d) de la revendication 1, caractérisé en ce que

e) une résistance de roue libre de bobine de réactance (R1, ..., Rx) est montée en série avec chaque diode de roue libre de bobine de réactance;

f) au moins une bobine de réactance limiteuse d'intensité (Lx) est montée entre au moins deux thyristors GTO (Th1, Th2);

g) au moins un condensateur de surtension (C1) est prévu;

h) ce condensateur étant en liaison active, d'une part, par l'intermédiaire d'une résistance de décharge de condensateur (R6), avec une première borne de tension continue (2, 3), et

i) d'autre part, avec une deuxième borne d'alimentation de tension continue (3, 2) portant un potentiel opposé (−, +) du convertisseur de tension;

j) une diode (D6), dont l'anode est connectée au côté à potentiel positif de la résistance de décharge de condensateur (R6), étant prévue en liaison dans une branche parallèle, avec cette résistance de décharge de condensateur (R6).

6. Convertisseur de tension suivant l'une quelconque des revendications 1 à 5, caractérisé en ce que

a) le circuit de décharge de déclenchement (5) comporte une diode de roue libre de thyristor (D8) montée en antiparallèle par rapport aux thyristors GTO (Th1 à Th4);

b) au moins une diode de protection de thyristor (D5) de la même polarité que le thyristor GTO;

c) au moins un condensateur de protection de thyristor (C5) monté en série avec la diode de protection de thyristor (D5), et

d) au moins une résistance de protection de thyristor (R5) dans une branche parallèle à la diode de protection de thyristor.

7. Convertisseur de tension suivant la revendication 6, caractérisé en ce que

a) la diode de protection de thyristor (D5) et le condensateur de protection de thyristor (C5) présentent le même sens pour l'axe des composants que le thyristor (Th1, . . ., Th4), et

b) les bornes de connexion électrique entre les thyristors et les autres composants sont d'une réalisation à faible induction.

**Claims**

1. Voltage converter
a) having two direct-voltage connections (2, 3) carrying opposite potential, and an alternating voltage connection (1),

b) having at least two series-connected gate turn-off GTO thyristors (Th1 . . . Th4), which each exhibit a parallel-connected turn-off relief circuit (5),

c) having at least one current limiting reactor (L1 . . . L4, Lx) in series with the GTO thyristors,

d) a reactor free-wheeling diode (D1 . . . D4, Dx) being provided in a parallel branch to each current limiting reactor, characterized in that

e) a reactor free-wheeling resistor (R1 . . . R4, Rx) is connected in series with each reactor free-wheeling diode,

f) an overvoltage capacitor (C1) is provided,

g) which, on the one hand, is effectively connected via a reactor free-wheeling resistor (R1, R2, R6) to a first direct-voltage connection (2, 3) and

h) on the other hand, to a second direct-voltage connection (3, 2), carrying an opposite potential (−, +), of the voltage converter.

2. Voltage converter according to Claim 1, characterized in that

a) a first connection side of the overvoltage capacitor (C1) is effectively connected on the one hand, via a diode (D6) to an electric junction between a first current limiting reactor (L1, L3) and a first GTO thyristor (Th1) and

b) on the other hand, via a resistor effective as a reactor, free-wheeling resistor or as a capacitor discharge resistor (R6), which is connected in series with this diode (D6) in a parallel branch to this current limiting reactor, to a first direct-voltage connection (2, 3).

3. Voltage converter according to Claim 2, characterized in that

a) a second connection side of the overvoltage capacitor (C1) is effectively connected to a junction between a second current limiting reactor (L4) and a second GTO thyristor (Th2) and

b) a reactor free-wheeling resistor (R4) is connected in series with a reactor free-wheeling diode (D4) in a parallel branch to this second current limiting reactor.

4. Voltage converter according to Claim 3, characterized in that

a) the overvoltage capacitor (C1) is effectively connected, on the one hand, via a diode (D7) to an electric junction between the second current limiting reactor (L4) and the second GTO thyristor (Th4) and

b) on the other hand, via a capacitor discharge resistor (R7), which is connected in series with a diode (D7) in a parallel branch to this second current limiting reactor (L4), to a second direct voltage connection (3).

5. Voltage converter having the features a) to d) of Claim 1, characterized in that

e) a reactor free-wheeling resistor (R1 . . . R4, Rx) is connected in series with each reactor free-wheeling diode,

f) at least one current limiting reactor (Lx) is connected between at least two GTO thyristors (Th1, Th2),

g) at least one overvoltage capacitor (C1) is provided,

h) which, on the one hand, is effectively connected via a capacitor discharge resistor (R6) to a first direct-voltage connection (2, 3) and

i) on the other hand, to a second direct-voltage connection (3, 2), carrying an opposite potential (−, +), of the voltage converter

j) a diode (D6) being provided in a parallel branch to this capacitor discharge resistor (R6), whose anode is connected to the positive-potential side of the capacitor discharge resistor.

6. Voltage converter according to one of Claims 1 to 5, characterized in that

a) the turn-off relief circuit (5) exhibits a thyristor free-wheeling diode (D8) which is in antiparallel with the GTO thyristor (Th1, . . . Th4),

b) at least one thyristor circuit diode (D5) having the same polarity as the GTO thyristor,

c) at least one thyristor circuit capacitor (C5) which is connected in series with the thyristor circuit diode (D5), and

d) at least one thyristor circuit resistor (R5) in a parallel branch to the thyristor circuit diode.

7. Voltage converter according to Claim 6, characterized in that

a) the thyristor circuit diode (D5) and the thyristor circuit capacitor (C5) have the same axial constructional element direction as the thyristor (Th1 . . . Th4) and

b) the electric connections between the thyristors and the other components are constructed to have low inductance.

EP 0 212 155 B1

FIG.1   FIG. 2   FIG. 3

FIG. 4   FIG. 5   FIG.6

77/85

1